# EUROPÄISCHE PATENTANMELDUNG

(11) **EP 3 025 810 A1**
(43) Veröffentlichungstag der Anmeldung: **01.06.2016**
(21) Anmeldenummer: 15196328.7
(22) Anmeldetag: 25.11.2015
(51) Int. Cl.: B22F 3/105, B29C 67/00, B24C 1/04, B22F 3/24

(54) **VERFAHREN ZUM ABLÖSEN VON STÜTZSTRUKTURELEMENTEN VON EINEM NACH DER METHODE DES SELEKTIVEN LASERSCHMELZENS ODER LASERSINTERNS HERGESTELLTEN FORMKÖRPERS**

(30) Priorität: 25.11.2014 DE 102014224042
(71) Anmelder: Fockele, Matthias, 33178 Borchen (DE)
(72) Erfinder: Fockele, Matthias, 33178 Borchen (DE)
(74) Vertreter: Tiesmeyer, Johannes

(57) **Zusammenfassung**

Die Erfindung betrifft ein Verfahren zum Ablösen von Stützstrukturelementen (13) von einem nach der Methode des selektiven Laserschmelzens oder nach der Methode des selektiven Lasersinterns zusammen mit den Stützstrukturelementen (13) als monolithische Einheit vorzugsweise auf einem Trägersubstrat hergestellten Formkörpers (1), dadurch gekennzeichnet, dass die Stützstrukturelemente (13) mit Partikelstrahlung (19) beaufschlagt werden, um sie von dem Formkörper (1) abzulösen und zu entfernen.

## Beschreibung

Die Erfindung betrifft ein Verfahren zum Ablösen von Stützstrukturelementen von einem nach der Methode des selektiven Laserschmelzens oder nach der Methode des selektiven Lasersinterns zusammen mit den Stützstrukturelementen als monolithische Einheit auf einem Trägersubstrat hergestellten Formkörpers.

Die Erfindung befasst sich mit der Nachbereitung von Formkörpern, die nach der Methode des selektiven Laserschmelzens oder der Methode des selektiven Lasersinterns oder ggf. nach der Methode der Stereolithografie hergestellt wurden. Bei diesen Methoden erfolgt die Herstellung eines Formkörpers durch schichtweises Aufbauen aus pulverförmigem, insbesondere metallischem oder/und keramischem Werkstoff. Dazu benutzte Vorrichtungen umfassen ein Prozessraumgehäuse mit einem Prozessraum, eine Trägeranordnung als Basis für den Schichtaufbau und zur Bereitstellung eines Baufeldes in dem Prozessraum, eine Bestrahlungseinrichtung mit dem Baufeld oben gegenüberliegenden Komponenten zur Bestrahlung der jeweils zuletzt auf der Trägeranordnung präparierten Werkstoffpulverschicht in einem dieser Schicht zugeordneten Querschnittsbereich des herzustellenden Formkörpers mit Strahlung, die das Werkstoffpulver in diesem Querschnittsbereich durch Erhitzen zum Verschmelzen oder ggf. zum Versintern bringt, und eine Schutzgasfördereinrichtung zum Durchleiten von Schutzgas durch den Prozessraum.

Zum Stand der Technik derartiger Vorrichtungen kann z.B. auf die DE 199 05 067 A1, die DE 102 36 907 A1, die DE 102 08 150 A1, die DE 101 12 591 A1, die EP 1 839 781 A2 und die DE 10 2011 087 374 A1 verwiesen werden.

In der DE 199 54 891 A1 ist ein Beispiel für die Herstellung eines Formkörpers zusammen mit Stützstrukturelementen auf einem Trägersubstrat detailliert beschrieben.

Dünnwandige oder/und säulenartige filigrane Stützstrukturen werden beim selektiven Laserschmelzen und beim selektiven Lasersintern üblicherweise auf einer Substratplatte schichtweise aufgebaut, wobei oft auch eine stoffschlüssige Verbindung zwischen den Stützstrukturelementen und der Substratplatte entsteht. Im Verlauf des weiteren schichtweisen Bauprozesses werden dann die Schichten des gewünschten Formkörpers auf der Stützstruktur aufgebaut.

Die Stützstruktur mit ihren Stützstrukturelementen, nämlich dünnen Wandabschnitten, Säulen usw., dient einerseits dazu, nach Aufbau des Formkörpers diesen relativ leicht von der Substratplatte entfernen zu können, wobei die Stützstrukturelemente Sollbruchstellen darstellen. Die Stützstrukturen mit ihren Stützstrukturelementen dienen aber auch dazu, überhängende Bereiche des Formkörpers während des Bauprozesses von unten abzustützen.

Die Stützstrukturelemente sollen möglichst filigran und leicht vom Formkörper ablösbar gestaltet sein. Sie werden üblicherweise aus dem gleichen Werkstoffpulver wie der Formkörper in einem Bauprozess hergestellt. Oft besteht auch das Trägersubstrat (Substratplatte) aus dem gleichen Werkstoff. Als Werkstoffpulver kommen z.B. Stahlpulver, Goldpulver, Titanpulver, u.v.m. infrage. Auch keramische Pulvermaterialien oder Kunststoffe können nach der Methode des selektiven Laserschmelzens/Lasersinterns Verwendung finden.

Nach Fertigstellung des Bauprozesses und ggf. Einhaltung einer Abkühlungszeit erfolgt das Separieren des Formkörpers, indem zunächst überschüssiges Pulver davon entfernt wird. Daraufhin wurde bisher unter Zuhilfenahme mechanischer Schneid- und Trennwerkzeuge der Formkörper von der Substratplatte unter Verletzung der Stützstrukturen abgelöst. An dem Formkörper weiterhin anhaftende Stützstrukturen wurden dann ebenfalls mit mechanischen Trennwerkzeugen, einschließlich Schleifgeräten und Poliermitteln vom Formkörper abgetragen, woraufhin noch ein Oberflächenfinishing des Formkörpers vorgenommen wurde.

Aufgabe der vorliegenden Erfindung ist es, die Nachbereitung von nach der Methode des selektiven Laserschmelzens oder Lasersinterns hergestellten Formkörpern zu vereinfachen.

Hierzu wird gemäß Anspruch 1 ein Verfahren vorgeschlagen, bei dem die Stützstrukturelemente mit Partikelstrahlung beaufschlagt werden, um sie vorzugsweise unter Weglassung von sie berührenden Trennwerkzeugen insgesamt durch Impulsübertrag von dem Formkörper abzulösen und zu entfernen.

Als Strahlpartikel der Partikelstrahlung werden vorzugsweise Hartmetallpartikel oder/und Glaspartikel oder/und Keramikpartikel oder/und Korundpartikel eingesetzt, die mit hoher Geschwindigkeit gerichtet auf die abzulösenden Stützstrukturelemente aufgeschossen werden, um die Stützstrukturelemente wegzubrechen und zu entfernen.

Dies erfolgt vorzugsweise in einer Strahlkabine mittels einer gezielt auf die betreffenden Bereiche der Stützstrukturen ausrichtbaren Düse. Die Strahlkabine kann als Glovebox ausgebildet sein, bei welcher die Bedienungsperson einen in die Kabine eingestülpten Dichthandschuh benutzen kann, um eine Partikelstrahldüse zu bewegen und auszurichten. Die Stützstrukturelemente können beim Bauprozess so dimensioniert werden, dass das erfindungsgemäße Verfahren in optimaler Weise mit optimalem Ergebnis durchgeführt werden kann. So kann es vorgesehen sein, die Wanddicken und Säulendurchmesser der Stützstrukturelemente auf ein bestimmtes Maß zu begrenzen, z.B. auf ≤ 0,5 mm, vorzugsweise ≤ 0,2 mm.

Als Trägermedium der Partikelstrahlung kommt insbesondere Druckluft oder unter hohen Druck gesetztes Wasser infrage, welches zusammen mit den Strahlpartikeln auf die Stützstrukturelemente aufgestrahlt wird.

Als Strahlpartikel kommen Perlen oder auch unregelmäßig geformte Partikel infrage, deren Korngröße vorzugsweise ca. <1 mm, besonders bevorzugt ca. < 0,3 mm beträgt.

Gemäß einer besonders bevorzugten Ausführungsform des Verfahrens erfolgt das Ablösen der Stützstrukturelemente mittels der Partikelstrahlung auch von dem Trägersubstrat (Substratplatte). Damit kann nicht nur der Formkörper, sondern auch die Substratplatte in einem Arbeitsgang in einen von Stützstrukturelementen befreiten Zustand gebracht werden. Dies kann in vielen Fällen in einer Weise erfolgen, dass die Oberflächen des Trägersubstrats und des Formkörpers bereits ohne weiteren Nachbearbeitungsbedarf geglättet werden.

Die Erfindung wird anhand der Figuren nachstehend an einem Ausführungsbeispiel skizziert.
- Figur 1: zeigt in einer schematischen Darstellung einen Bauprozess in einer Vorrichtung zur Herstellung von Formkörpern nach der Methode des selektiven Laserschmelzens oder des selektiven Lasersinterns oder dgl..
- Figur 2: zeigt in einer schematischen Darstellung eine Momentaufnahme eines Beispiels des erfindungsgemäßen Ablösens und Entfernens von Stützstrukturelementen von einem gemäß Figur 1 hergestellten Formkörper.

Wie an sich bekannt, erfolgt die Herstellung eines Formkörpers 1 nach der Methode des selektiven Laserschmelzens auf einer Bauplattform 3 innerhalb eines Prozessraumes (hier nicht vollständig gezeigt), der üblicherweise Schutzgasatmosphäre aufweist. Die Bauplattform 3 ist innerhalb ihres Bauzylinders 5 schrittweise absenkbar, um jeweils Platz für eine neue Pulverschicht auf einer zuletzt durch Bestrahlen mit einem Laserstrahl 7 oder dgl. ortsselektiv verfestigten und damit zu einer Schicht des Formkörpers 1 gewordenen Pulverschicht zu machen. Der Laserstrahl 7 zum Umschmelzen der jeweiligen obersten Pulverschicht 8 ist mittels der Steuereinrichtung 9, 11 ablenkbar, so dass er jede Stelle der jeweiligen obersten Pulverschicht 8 auf der Bauplattform 3 nach Maßgabe von Geometriebeschreibungsdaten des herzustellenden Formkörpers erreichen kann, um sie entsprechend durch Umschmelzen zu verfestigen. Der Formkörper 1 entsteht somit Schicht für Schicht auf einem Substrat auf der Trägerplattform 3, wobei Stützstrukturen 13 zusammen mit dem Formkörper 1 als monolithische Einheit auf dem Substrat hergestellt werden. Die Stützstrukturen 13 stützen Überhänge des während des Bauprozesses entstehenden Formkörpers 1, so im gezeigten Ausführungsbeispiel die Überhänge 15, 16 und ferner auch die unterste Schicht 10 des Formkörpers 1.

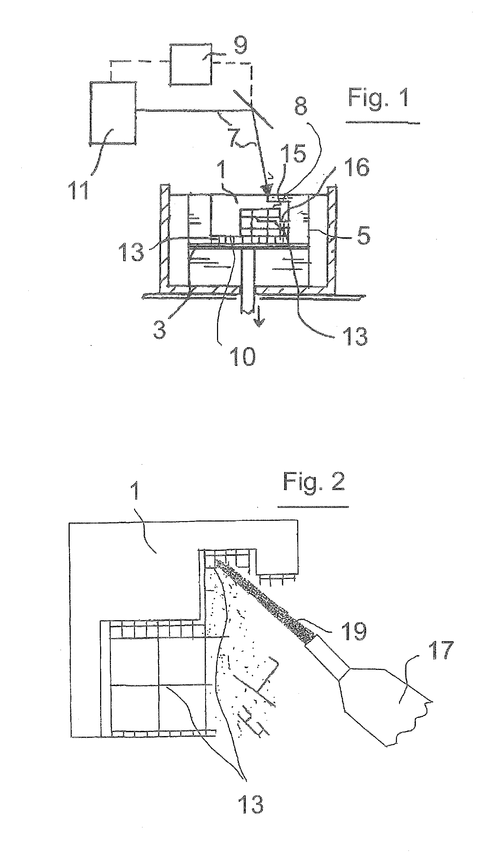

Nach Fertigstellung des Formkörpers 1 sind die Stützstrukturelemente 13 von diesem zu entfernen. Wie in Figur 2 angedeutet, erfolgt dies gemäß der vorliegenden Erfindung unter Verwendung von Partikelstrahlung 19 unter Hochdruck, wobei es sich bei den Strahlpartikeln um Hartmetallpartikel oder/und Glaspartikel oder/und Keramikpartikel oder/und Rundpartikel oder/und Sandpartikel oder dgl. handeln kann. In Figur 2 ist angedeutet, wie eine Partikelstrahlungsdüse 17 einen Partikelstrahl 19 abgibt und dabei Stützstrukturelemente 13 an dem Formkörper 1 zerstört und abtrennt. Dies kann in einer Strahlkabine erfolgen, wobei die Düse 17 z.B. von einer Bedienperson mittels eines Handschuhs geführt werden kann, der einen Eingriff von außen erlaubt (Glovebox-Prinzip). Es hat sich gezeigt, dass die Stützstrukturelemente 13 auf diese Art und Weise sehr schnell und gründlich von dem Formkörper 1 entfernt werden können, so dass mechanische Trennwerkzeuge, mit denen die Stützstrukturelemente in Verbindung zu bringen wären, vorzugsweise vollständig entfallen können.

Auch ist es in entsprechend vorteilhafter Weise möglich, die Stützstrukturelemente von einer Trägerbasisplatte zu entfernen, sofern sie auch damit zu einer monolithischen Einheit aufgebaut worden sind.

## Patentansprüche

1. Verfahren zum Ablösen von Stützstrukturelementen von einem nach der Methode des selektiven Laserschmelzens oder nach der Methode des selektiven Lasersinterns zusammen mit den Stützstrukturelementen als monolithische Einheit auf einem Trägersubstrat hergestellten Formkörpers, **dadurch gekennzeichnet, dass** die Stützstrukturelemente mit Partikelstrahlung beaufschlagt werden, um sie vorzugsweise insgesamt von dem Formkörper abzulösen und zu entfernen.

2. Verfahren nach Anspruch 1, wobei das Verfahren das Ablösen der Stützstrukturelemente mittels der Partikelstrahlung auch von dem Trägersubstrat umfasst.

3. Verfahren nach Anspruch 1 oder 2, wobei als Strahlpartikel der Partikelstrahlung Hartmetallpartikel oder/und Glaspartikel oder/und Keramikpartikel oder/und Korundpartikel oder/und Sandpartikel eingesetzt werden.

4. Verfahren nach einem der vorhergehenden Ansprüche, wobei die Strahlpartikel mittels Druckluft oder/und unter Druck gesetztes Wasser als Trägermedium auf die Stützstrukturelemente gelenkt werden.

5. Verfahren nach einem der vorhergehenden Ansprüche, wobei das Ablösen der Stützstrukturelemente von dem Formkörper in einer Strahlkabine erfolgt.

6. Verfahren nach einem der vorhergehenden Ansprüche, wobei Strahlpartikel mit einer Korngröße ≤1mm, vorzugsweise ≤ 0,5mm und besonders bevorzugt ≤ 0,3 mm verwendet werden.
